# EUROPEAN PATENT SPECIFICATION

(11) **EP 3 085 129 B1**
(45) Date of publication and mention of the grant of the patent: **18.12.2019**
(21) Application number: 14871883.6
(22) Date of filing: 18.12.2014
(51) Int. Cl.: H04W 4/08, H04W 4/12, H04W 4/21, H04L 12/58, H04L 12/18

(54) **GROUP MESSAGING**
GRUPPENBENACHRICHTIGUNG
MESSAGERIE DE GROUPE

(30) Priority: 20.12.2013 SE 1351556
(43) Date of publication of application: 26.10.2016
(73) Proprietor: Smsgrupp I Stockholm AB, 106 54 Stockholm (SE)
(72) Inventor: KARLSSON, Tord, S-163 40 Spånga (SE); JACOBSON, Martin, 16839 Bromma (SE); RIBLOM, Rickard, S-113 23 Stockholm (SE); VAHLNE, Daniel, 18492 Åkersberga (SE)
(74) Representative: Groth & Co. KB
(86) International application number: PCT/SE2014/051529
(87) International publication number: WO 2015/094104

(56) References cited:
- WO-A1-2013/174212
- WO-A1-2014/046686
- WO-A2-2013/130887
- CN-A- 102 185 699
- CN-A- 102 647 665
- KR-A- 20140 022 712
- KR-B1- 101 111 228
- US-A1- 2012 102 073
- US-A1- 2012 263 083
- US-A1- 2013 144 951
- US-A1- 2014 112 251

## Description

### Field of invention

The present invention relates to a method for an operator to form a group of users for internal communication within said group by means of digital messaging over a communications network each user using a communication device. Each user has a unique identity in said communications network, and any user in the group can act as a sender of a message, in which case every other user in the group is a receiver of the message. The sender sends the message to a message server belonging to the operator, and the message server forwards the message to each receiver.

The present invention also relates to a message server and computer program products through which the inventive method can be implemented.

### Description of background art

It is known to form groups of users where one user can send a message one time to all the users in the group, where users belonging to one group share one and the same group identity to enable a message server to identify a group message and identify the members belonging to the group. Publications US 2013/0144951 A1 and US 2012/0102073 A1 are examples of known solutions for group messaging where a group adenity is used to define a group and the members belonging to the group.

One known way is for a user to form a group in its own communication device, such as in a smart phone, where it is possible to send a short message, an SMS, to several users, in which case the message is addressed to a group, but where the communication device interprets the group into several receivers and sends the message several times, one for each receiver.

It is also known to use a message server to manage group communication where the user sends the message one time to the message server and the message server sends the message to the different members of the group. In this case the user must have separate address information to the message server in order to send the message that way.

When it comes to the specific situation of using short message services (SMS) it is normal that an operator's short message service center (SMSC) connect via SMPP over the internet to send and receive SMS, and to connect via SMPP normally requires an agreement or a commercial contract in place between the operators.

### Summary of the present invention

### Problems

With the standpoint of the background art as described above it is known that it is a problem that if all possible combinations of groups would have unique telephone numbers to send SMS to, then the telecom operators would quickly run out of telephone numbers.

It is also a problem to enable messaging on sms, mms, ip-messaging solution and other different platforms into a cross-functional messaging system that works in all systems, in a messaging system for groups. This variation is even more problematic as each user wants to communicate using different platforms.

It is a problem to optimize the management of messaging in a cross-functional group messaging system where several different channels can be available to the different users in a group.

It is a problem to manage the messaging in a cross-functional group messaging system where available communication channels for a user varies in time due to the use of mobile communication devices that moves through different parts of the communications network.

It is a problem to manage the messaging in a cross-functional group messaging system where available communication channels for a user varies with communication disturbances in the communications network.

When using SMS messaging and since group messaging can involve many members from different operators there is a need for by-passing the existing system which is normally not a need in normal messaging. It is thus a problem to find a technical solution that circumvents the need for a commercial contract in group messaging systems.

If there are more than one operator involved in the group messaging then to send SMS from an operator's SMSC to subscribers belonging to another operator will normally create a cost for the first operator since operators normally have to pay an interconnect fee to terminate SMS in the network of another operator.

### Solution

The invention is defined by the independent claims. With the purpose of solving one or more of the above mentioned problems, and from the standpoint of the field of invention as described above, the present invention teaches that the operator assigns a group identity to each user through which each user can send a message to the group. The combination of the group identity for a user and the user identity uniquely specifies one specific user as a member of one specific group. Every group identity is identified as a server identity for the message server by the communications network, and the message server, when receiving a message, identifies the sender of the message by means of the sender user identity. The message server identifies the group, and thus the receiving users, by means of the unique combination of the sender's user identity and the group identity used by the sender.

This solution provides the possibility to reuse the same group identity as a group identity for different users in the same group, or in different groups, as long as each combination of a group identity and a user identity is unique.

The user identity can be a communication device identity, such as a subscriber number for the communication device, in the communications network.

The user identity can also be a user identity for IP communication, such as Skype, Viber, WhatsApp, Joyn, in the communications network.

The group identity can be a device identity for mobile communication, such as a subscriber number for the message server, in the communications network.

The group identity can also be a user identity for IP communication, such as Skype, Viber, WhatsApp, Joyn, in the communications network.

It is proposed that when users can send and receive messages through different types of communication devices using different communication protocols and message formats, the message server receives the message according to a protocol and format used by the sender and, if required, that the message server reformat the message to send it to each receiver according to a format and protocol used by respective receiver or the format required to route the message to the receiver.

If a receiver can receive a message through various channels it is proposed that the message server send a message to the receiver simultaneously through each available channel.

It is proposed that when the message server has received a confirmation of received message through one of the available channels to a receiver, the message server withdraws the messages sent through other channels to the receiver if the channel allows a withdrawal of a message.

It is also proposed that when the message server has received a confirmation of received message through one of the channels, the message server changes the receiver's device notification by for example muting the notification for a new message if said receiver's device allows for such notification change.

Instead of sending through all available channels to one receiver simultaneously it is proposed that the message server optimize the sending of a message to a receiver by starting to send through one channel, and if no confirmation of receipt is received, then sending through another channel, and so on until a confirmation of receipt has been received or all channels have been used.

It is also proposed that the optimization can be a cost optimization, where to least expensive channel is used first and the most expensive channel is used last.

The optimization can also be a quality optimization depending on available quality of service (QoS), where the channel providing the highest QoS is used first and the channel providing the lowest QoS is used last.

QoS may be evaluated for quality parameters for used communications connection, such as latency, bandwidth and number of hops or it may be evaluated from historical disturbances, where historical disturbances depend on either disturbances in the network, or that a user creates network problems such as going from communicating through one network to communicating through another network or is in an area of bad network coverage or capacity.

It is thus possible for the operator to choose to send the message through a specified channel or choose among different ways of sending the message through multiple channels depending on content in the message or to optimize for cost or quality.

It is proposed that the sender receives a final confirmation message from the message server after the sending of a message, where the final confirmation message includes information on if one or several receivers did or did not receive the message or if it is in transport towards the receiver's device.

This final confirmation message may include information on each receiver that did not receive the full content of the message, such as "User 1 received text but not picture", "User 2 did not receive any information", or similar information described in text or graphically by pictures.

The communications network may comprise several types of networks functioning under different protocols, such as GSM, GPRS, 3G, 4G, and wifi, where these networks and protocols can provide different kinds of messages, such as SMS, MMS, RCS, RCSe, Joyn, Skype, Viber, WhatsApp and IP-routed messages.

The method also relates to the user interface and the users communication device and it is proposed that the communication device can be any kind of device for communication that can be connected to a communications network, such as mobile telephones, tablets, mobile computers and stationary computers.

When it comes to the specific problems of SMS communication where a message has to be sent via two or more operators and sometimes between different countries it is proposed that the operator could want to receive SMS from a country and send SMS to a country without having to have an agreement in place with another operator.

By register one or more SIM cards in a country by physically bringing them to the country of the operator and let them register in a network (visiting network) would allow the operator to receive the SMS without any cost. The operator can then receive the SMS and forward it to the users either routed between each operator's SMSC or routed from the operator's message center (such as its SMSC) via the other networks MSC to the users communication device.

The user identity could also be virtually moved from one country to another be registering the user identity in another network in another country. An example of this could be that instead of bringing the SIM-cards physically to the country, the SIM-cards could be virtually moved by registering the SIM card details such as the IMSI number or MSISDN in another operators HLR.

In the communications network the messaging traffic can be routed between each telecom operators short message service center (SMCS) or routed to other operators group members from the service operator to the group members users identities SIM card identity, such as IMSI number and/or telephone number, which are registered in a third operators network. This would allow lower cost routing. The registration is normally done in the telecom operators Home location register (HLR) or Visitor location register (VLR).

It is also proposed that the sender can choose to send the message through a specified channel or choose among different ways of sending the message through multiple channels depending on content in said message or to optimize for cost or quality.

The communication device can be set to either:
- dictate through which channel a message is to be sent,
- guide the user into using a specific channel for sending a message depending on content or settings for cost and/or QoS, or
- allow the user to choose freely from different available channels for sending a message.

The present invention also relates to a message server adapted to manage a group of users and the internal communication within the group of users, where the communication is performed by means of digital messaging over a communications network, each user using a communication device. Each user has a unique identity in the communications network, and any user in the group can act as a sender of a message, in which case every other user in the group is a receiver of the message. The message server is adapted to receive the message from the sender, and the message server is adapted to forward the message to each receiver.

The present invention specifically teaches that the message server comprises a storage device adapted to store a group identity assigned to each user through which each user can send a message to the group. The message server is also adapted to uniquely identify the combination of a user's group identity and user identity as a member of a specific group. Every group identity is implemented in the message server so that it is identified as a server identity for the message server by the communications network.

The message server, when receiving a message, is adapted to identify the sender by means of the sender user identity, to identify the group by means of the unique combination of the user identity and the group identity belonging to and used by the sender, and to send the received message to the receiving users.

This means that the message server can be adapted to reuse the same group identity as a group identity for different users in the same group, or in different groups, as long as each combination of a group identity and user identity is unique.

The user identity can be a communication device identity, such as a subscriber number for the communication device, in the communications network or a user identity for IP communication, such as Skype, Viber, WhatsApp, Joyn, in the communications network.

The group identity can be a device identity for mobile communication, such as a subscriber number for the message server, in the communications network or a user identity for IP communication, such as Skype, Viber, WhatsApp, Joyn, in the communications network.

It is proposed that the message server is adapted to receive and send messages from users with different types of communication devices using different communication protocols and message formats, where the message server is adapted to receive the message according to a protocol and format used by the sender and, if required, to reformat the message and to send it to each receiver according to a format and protocol used by respective receiver or the format required to route the message to the receiver.

The message server can be adapted to send a message to a receiver through various channels, and simultaneously through each available channel. In that case it is proposed that when the message server has received a confirmation of received message through one of the channels, then the message server is adapted to withdraw the messages sent through other channels to the receiver if the channel allows a withdrawal of a message.

It is also proposed that when the message server has received a confirmation of received message through one of the channels, the message server changes the receiver's device notification by for example muting the notification for a new message if the receiver's device allows for such notification change.

It is also proposed that when there is a possibility for the message server to send a message to a receiver through various channels, then it is adapted to optimize the sending of a message to a receiver by starting to send through one channel, and if no confirmation of receipt is received, then sending through another channel, and so on until a confirmation of receipt has been received or all channels have been used.

The message server can be adapted to perform the optimization as a cost optimization, where to least expensive channel is used first and the most expensive channel is used last, or as a quality optimization depending on available quality of service (QoS), where the channel providing the highest QoS is used first and the channel providing the lowest QoS is used last.

The message server can be adapted to evaluate the QoS for quality parameters for used communications connection, such as latency, bandwidth and number of hops, and/or from historical disturbances, where historical disturbances depend on either disturbances in the network or that a user changes from communicating through one network to communicating through another network.

In the selection of available communication channels the message server can be adapted to choose to send the message through a specified channel or to choose among different ways of sending the message through multiple channels depending on content in the message or to optimize for cost or quality.

It is also proposed that the message server is adapted to send a final confirmation message to the sender after the sending of a message, which includes information on if one or several receivers did or did not receive the message or if the message is in transport towards the receiver's device in said final confirmation message. Such confirmation message may also include information on each receiver that did not receive the full content of the message, such as "User 1 received text but not picture", "User 2 did not receive any information", or similar information described in text or graphically by pictures.

An inventive message server is adapted to function in a communications network comprising several types of networks functioning under different protocols, such as GSM, GPRS, 3G, 4G, and wifi, where these networks and protocols can provide different kinds of messages, such as SMS, MMS, RCS, RCSe, Joyn, Skype, Viber, WhatsApp and IP-routed messages.

The inventive message server is also adapted to communicate with any kind of device for communication that can be connected to a communications network, such as mobile telephones, tablets, mobile computers and stationary computers.

The present invention also relates to a computer program product comprising computer program code, which, when executed by a computer, enables the computer to perform the steps of a message server as described in the inventive method, and to a computer program product comprising computer program code, which, when executed by a computer, enables the computer to perform the steps of a communication device as described in the inventive method.

The present invention also relates to a computer readable medium carrying computer program code according to any of the inventive computer program products.

### Advantages

The advantages of a method, a message server and computer program products according to the present invention are that group messaging can be managed with the use of very few group identities. One group identity can be reused for an unlimited number of users as long as one user is not a member of more than one group; each user has to have a group identity for each group that the user belongs to.

It is also an advantage that the present invention allows users of different kinds of communication protocols or message formats to form groups where messages can be sent between the group members and received by all group members.

The invention provides into a cross-functional messaging system that works in all systems, in a messaging system for groups that can be optimized for messaging where several different channels can be available to the different users in a group.

### Brief description of the drawings

A method, a message server and computer program products according to the present invention will now be described in detail with reference to the accompanying drawings, in which:
- Figure 1: is a schematic and very simplified illustration of a message server and users/devices in groups for communication within the groups,
- Figure 2: is a schematic and simplified illustration of a possibility for a message server to send a message to a receiver thorough several channels, and
- Figure 3: is a schematic and simplified illustration of a possibility for a user to send a message to a message server thorough several channels.

### Description of embodiments as presently preferred

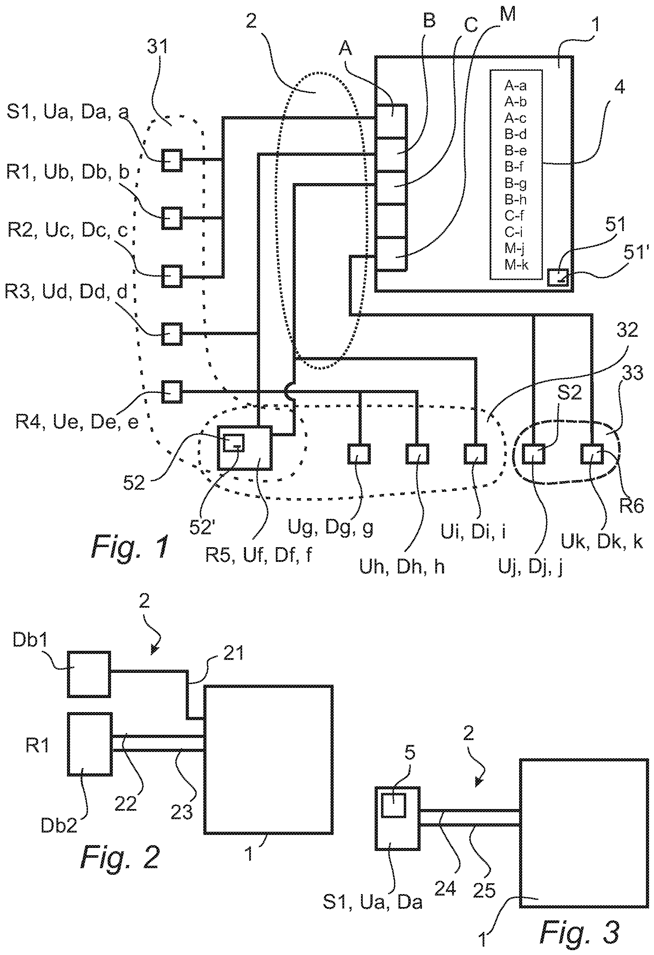

The present invention will now be described with reference to figure 1 illustrating a method for an operator to form a group 31, 32, 33 of users Ua, Ub, Uc, ..., Uk for internal communication within the group 31, 32 of users by means of digital messaging over a communications network 2.

Each user is using some kind of communication device Da, Db, Dc, ..., Dk, where each user has a unique identity a, b, c, ..., k in the communications network 2.

Any user in the group 31 can act as a sender S1 of a message, in which case every other user in the group 31 is a receiver R1, R2, R3, R4, R5 of the message, where the sender S1 sends the message to a message server 1 belonging to the operator, and the message server 1 forwards the message to each receiver R1, R2, R3, R4, R5.

It is important to understand that the lines connecting the devices Da, Db, Dc, ..., Dk with the server 1 is a schematic illustration on how a user Ua, Ub, Uc, ..., Uk is assigned to a group identity A, B, C, ..., M at the server 1. These lines do not illustrate any kind of lines for communication, all communication is made through the schematically illustrated communications network 2.

The operator assigns a group identity A, B, C, .., M to each user Ua, Ub, Uc, ..., Uk through which each user can send a message to the group 31, 32, 33. The combination of the group identity A for a user Ud and the user identity d uniquely specifies a user Ud as a member of a specific group 31.

In the communications network 2 every group identity A, B, C, ..., K is identified as a server identity for the message server 1, which means that when a user Ua, Ub, Uc, ..., Uk sends a message using the group identity that was assigned to the user the message is sent to the message server 1.

The message server 1, when receiving a message sent by a sender S1 through a group identity A, identifies the sender S1 by means of the sender user identity Ua. The message server identifies the group 31 to which the message is to be sent, and thus the receiving users R1, R2, R3, R4, R5, by means of the unique combination of the sender's S1 user identity a and the group identity A used by the sender S.

The fact that it is a combination A-a of a sender's S1 user identity a and the group identity A used by the sender S1 that uniquely identifies the sender S1 and intended group 31 for a message makes it possible to reuse the same group identity A as a group identity for different users Ub, Uc in the same group 31, or in different groups, as long as each combination of a group identity and a user identity is unique.

In the figure users Ua, Ub, Uc, Ud, Ue and Uf are members in a first group 31, users Uf, Ug, Uh and Ui are members in a second group 32, and users Uj and Uk are members in a third group 33. Here it can be seen that several users Ua, Ub, Uc share the same group identity A, and even users Ud, Ue, Uf, Ug, Uh of different groups 31, 32 share the same group identity B. It can also be seen that one user Uf is a member of both groups 31, 32 and that this user has been assigned two group identities B, C which allows the user Uf to manage the two groups through the two different group identities and it allows the message server 1 to decide to which group a message from the user Uf should be sent. Every combination of a user identity a, b, c, ..., k and a group identity A, B, C, ..., M is unique which enables the use of a limited number of group identities A, B, C, ..., M to form a very large number of unique combinations of user identity and group identity.

The user identity a, b, c, ..., k, may be any kind of identity whereby a user can be identified while communicating over the communications network 2. The user identity may for instance be a communication device identity, such as a subscriber number for the communication device, in the communications network. It may also be a user identity for IP communication, such as Skype, Viber, WhatsApp, Joyn, in the communications network.

For the purpose of allowing the message server to communicate with any user it is proposed that the group identity A, B, C, ..., M may be any kind of identity whereby it is possible to send a message to the message server 1 over the communications network 2. The group identity may for instance be a device identity for mobile communication, such as a subscriber number for the message server 1, in the communications network 2. It may also be a user identity for IP communication, such as Skype, Viber, WhatsApp, Joyn, in the communications network 2.

With the purpose of allowing each receiver R1, R2, R3, R4, R5 to identify a message as coming from the group 31 it is proposed that the message server 1 sends the message to respective receiver using the group identity assigned to respective receiver as a sender identity so that the receiver can see the group identity A, B as the sender of the received message. In the figure user Uf is a member of two groups 31, 32 and if a message comes from the first group 31 then the message server 1 will use the group identity B that is assigned to user Uf as a member of the first group 31, however if a message comes from the second group 32 then the message server 1 will use the group identity C that is assigned to user Uf as a member of the second group 32.

The users Ua, Ub, Uc, ..., Uk can send and receive messages through different types of communication devices Da, Db, Dc, ..., Dk using different communication protocols and message formats. The invention teaches that the message server 1 receives the message according to a protocol and format used by the sender S1 and, if required, that the message server 1 reformat the message to send it to each receiver R1, R2, R3, R4 according to a format and protocol used by respective receiver or the format required to route the message to the receiver.

Figure 2 shows that a receiver R1 may have access to the communications network 2 through different channels 21, 22, 23, and even through different communication devices Db1, Db2, hence a receiver R1 can receive a message through various channels 21, 22, 23. It is proposed that the message server 1 may send a message to the receiver R1 simultaneously through each available channel 21, 22, 23. It is also proposed that when the message server 1 has received a confirmation of received message through one of the channels 21, the message server 1 may either withdraw the messages sent through other channels 22, 23 to the receiver R1 if the channel allows a withdrawal of a message, or the message server 1 may change the receiver's device notification by for example muting the notification for a new message if the receiver's device Db2 allows for such notification change.

Another proposed embodiment teaches that when a receiver R1 can receive a message through various channels 21, 22, 23, then the message server 1 may optimize the sending of a message to a receiver R1 by starting to send through one channel 21, and if no confirmation of receipt is received, then sending through another channel 22, and so on until a confirmation of receipt has been received or all channels have been used.

The optimization may be a cost optimization, where to least expensive channel 21 is used first and the most expensive channel 23 is used last, or it may be a quality optimization depending on available quality of service (QoS), where the channel 23 providing the highest QoS is used first and the channel 21 providing the lowest QoS is used last.

QoS can be evaluated in different ways, for instance it can be evaluated for quality parameters for used communications connection 21, 22, 23, such as latency, bandwidth and number of hops or it can be evaluated from historical disturbances, where historical disturbances depend on either disturbances in the network or that a user changes from communicating through one network to communicating through another network.

Depending on what channel the sender S1 has used for sending a message, and depending on the content of the message, and with the knowledge of different available channels 21, 22, 23 for sending messages to users it is proposed that the operator can choose to send a message through a specified channel 21 or choose among different ways of sending the message through multiple channels 21, 22, 23 depending on content in the message or to optimize for cost or quality.

With the purpose of providing information to the sender regarding the receipt of the message among the different group members it is proposed that the sender S1 receives a final confirmation message from the message server 1 after the sending of a message, where the final confirmation message includes information on if one or several receivers did or did not receive the message or if it is in transport towards the receiver's device Db2.

The final confirmation message may also include information on each receiver that did not receive the full content of the message, such as "User 1 received text but not picture", "User 2 did not receive any information", or similar information described in text or graphically by pictures.

It should be understood that the invention is not limited to certain means of communication. The communications network 2 comprises several types of networks functioning under different protocols, such as GSM, GPRS, 3G, 4G, and wifi, where these networks and protocols can provide different kinds of messages, such as SMS, MMS, RCS, RCSe, Joyn, Skype, Viber, WhatsApp and IP-routed messages, and the communication device Da, Db, Dc, ..., Dk used by a user Ua, Ub, Uc, ..., Uk can be any kind of device for communication that can be connected to a communications network 2, such as mobile telephones, tablets, mobile computers and stationary computers.

It should be understood that the invention can be used in a situation where the operator in a first country wants to receive and send messages such as SMS to or from a second country and its subscribers in that country without needing to have commercial agreement in place with the telecom operator in the second country or to reduce the costs when terminating messages in a telecom network in the second county.

This can be solved by registering one or more SIM cards or identity modules by physically or virtually bringing them to the first country and letting them register in the telecom network (visiting network), schematically illustrated as group identity M in figure 1, in the first country, and then messages normally will be automatically forwarded to the group message service which can send the message back to the senders group 33 who normally is in the same country as the sender S2. The messaging traffic can for example be routed in the communications network between each telecom operators short message service center or routed to other operator's group members from the service operator via the receiving operators Mobile Switching Center (MSC).

When combining this with the possibility to use only a few group identities M for a lot of people's groups (33) it creates a possibility for groups to communicate cross operators, without having agreements with the involved operators.

The registration of the whereabouts of the group members Uj, Uk normally uses the SIM card identity, such as IMSI number and/or telephone number, the user identity j, k according to the inventive method, which is normally registered in the HLR or VLR in an operator's network.

Figure 3 illustrates that if several different communication channels 24, 25 are available for a user Ua then it is proposed that the sender S1 can choose to send a message through a specified channel 24 or choose among different ways of sending the message through multiple channels 24, 25 depending on content in the message or to optimize for cost or quality.

Used communication device Da of the user can be set to either:
- dictate through which channel a message is to be sent,
- guide the user Ua into using a specific channel for sending a message depending on content or settings for cost and/or QoS, or
- allow the user Ua to choose freely from different available channels for sending a message.

A message server according to the present invention will now be described with renewed reference to figure 1. The inventive message server 1 is adapted to manage a group 31, 32, 33 of users Ua, Ub, Uc, ..., Uk and the internal communication within the group of users.

The communication is performed by means of digital messaging over a communications network 2, each user Ua, Ub, Uc, ..., Uk using some kind of a communication device Da, Db, Dc, ..., Dk, where each user Ua, Ub, Uc, ..., Uk has a unique identity a, b, c, ..., k in the communications network 2.

Any user Ua in the group 31 can act as a sender S1 of a message, in which case every other user Ub, Uc, Ud, Ue, Uf in the group 31 is a receiver R1, R2, R3, R4, R5 of the message, and the message server 1 is adapted to receive the message from the sender S1, and forward the message to each receiver R1, R2, R3, R4, R5.

The message server 1 comprises a storage device 4 adapted to store a group identity A, B, C, ...., M assigned to each user Ua, Ub, Uc, ..., Uk through which each user can send a message to the group 31, 32.

The message server 1 is adapted to uniquely identify a user Ua, Ub, Uc, ..., Uk as a member of a group 31, 32 by means of the combination of a user's group identity A, B, C, .., M and user identity a, b, c, ..., k.

Every group identity A, B, C, ..., M is implemented in the message server 1 so that it is identified as a server identity for the message server 1 by the communications network 2, meaning that when the sender S1 sends a message to the group 31 using the assigned group identity A the message is sent to the message server 1.

The message server 1, when receiving a message, is adapted to identify the sender S1 by means of the sender user identity a, and to identify the group 31 by means of the unique combination A-a of the sender's user identity a and the group identity A used by the sender S.

As the group 31 has been identified the group members are known and the message server 1 is adapted to send the received message to the receiving users R1, R2, R3, R4, R5, which are the other members of the group 31.

The message server 1 is adapted to reuse the same group identity as a group identity for different users in the same group, or in different groups, as long as each combination of a group identity and user identity is unique.

The user identity a, b, c, .., k can be a communication device identity, such as a subscriber number for the communication device, in the communications network 2, or a user identity for IP communication, such as Skype, Viber, WhatsApp, Joyn, in the communications network 2, depending on what kind of communication device Da, Db, Dc, ..., Dk the user Ua, Ub, Uc, ..., Uk is using.

To enable communication with all kinds of devices it is proposed that the group identity A, B, C, .., M can be a device identity for mobile communication, such as a subscriber number for the message server 1, in the communications network 2, or a user identity for IP communication, such as Skype, Viber, WhatsApp, Joyn, in the communications network 2.

The invention teaches that, since the message server 1 is adapted to receive and send messages from users Ua, Ub, Uc, ..., Uk with different types of communication devices Da, Db, Dc, ..., Dk using different communication protocols and message formats, the message server 1 is adapted to receive the message according to a protocol and format used by the sender S1 and, if required, that the message server 1 is adapted to reformat the message and to send it to each receiver R1, R2, R3, R4, R5 according to a format and protocol used by respective receiver or the format required to route the message to the receiver.

Figure 2 illustrates that when a user is available to receive a message through several channels 21, 22, 23 it is proposed that the message server 1 is adapted to send a message to a receiver R1 through various channels 21, 22, 23, and that the message server 1 is adapted to send a message to the receiver R1 simultaneously through each available channel 21, 22, 23.

In this case it is proposed that the message server 1 is adapted to receive a confirmation of received message, and that when the message server 1 has received a confirmation of received message through one of the channels 21 then the message server is adapted to withdraw the messages sent through other channels 22, 23 to the receiver R1 if the channel allows a withdrawal of a message or that when the message server 1 has received a confirmation of received message through one of the channels 21, the message server 1 changes the receiver's device notification by for example muting the notification for a new message if the receiver's device Db2 allows for such notification change.

According to an alternative embodiment it is proposed that when the message server 1 is adapted to send a message to a receiver through various channels 21, 22, 23, the message server 1 is adapted to optimize the sending of a message to a receiver R1 by starting to send through one channel 21, and if no confirmation of receipt is received, then sending through another channel 22, and so on until a confirmation of receipt has been received or all channels have been used.

The message server 1 may be adapted to perform the optimization as a cost optimization, where to least expensive channel 21 is used first and the most expensive channel 23 is used last and/or as a quality optimization depending on available quality of service (QoS), where the channel 23 providing the highest QoS is used first and the channel 21 providing the lowest QoS is used last.

The message server can be adapted to evaluate the QoS for quality parameters for used communications connection, such as latency, bandwidth and number of hops and/or from historical disturbances, where historical disturbances depend on either disturbances in the network or that a user changes from communicating through one network to communicating through another network.

It is proposed that the message server 1 can be adapted to choose to send the message through a specified channel 21 or to choose among different ways of sending the message through multiple channels 21, 22, 23 depending on content in the message or to optimize for cost or quality.

The inventive message server 1 may be adapted to send a final confirmation message to the sender S1 after the sending of a message, and the message server 1 may be adapted to includes information on if one or several receivers R1, R2, R3, R4, R5 did or did not receive the message or if the message is in transport towards the receiver's device in the final confirmation message.

Such confirmation message may also include information on each receiver that did not receive the full content of the message, such as "User 1 received text but not picture", "User 2 did not receive any information", or similar information described in text or graphically by pictures.

The inventive message server 1 is adapted to function in a communications network 2 comprising several types of networks functioning under different protocols, such as GSM, GPRS, 3G, 4G, and wifi, where these networks and protocols can provide different kinds of messages, such as SMS, MMS, RCS, RCSe, Joyn, Skype, Viber, WhatsApp and IP-routed messages, and it is adapted to communicate with any kind of device for communication that can be connected to a communications network, such as mobile telephones, tablets, mobile computers and stationary computers.

With renewed reference to figure 1 it is shown that the present invention also relates to a computer program product 51 comprising computer program code 51', which, when executed by a computer, enables the computer to perform the steps of a message server 1 as described in the inventive method.

The present invention also relates to a computer program product 52 comprising computer program code 52', which, when executed by a computer, enables the computer to perform the steps of a communication device Df as described in the inventive method.

The present invention also relates to a computer readable medium carrying computer program code 51', 52' according to any one of the inventive computer program products 51, 52.

It will be understood that the invention is not restricted to the aforedescribed and illustrated exemplifying embodiments thereof and that modifications can be made within the scope of the invention as defined by the accompanying Claims.

## Claims

1. A method for an operator to form a group (31) of users (Ua, Ub, Uc, ..., Uk) for internal communication within said group (31) of users by means of digital messaging over a communications network (2) each user using a communication device (Da, Db, Dc, ..., Dk), where each user (a, b, c, .., k) has a unique identity in said communications network (2), where any user in said group (31) can act as a sender (S1) of a message, in which case every other user in said group (31) is a receiver (R1, R2, R3, R4, R5) of said message, where said sender (S1) sends said message to a message server (1) belonging to said operator, where said message server (1) forwards said message to each receiver (R1, R2, R3, R4, R5), and where said operator assigns a group identity (A, B, C, ..., M) to each user (Ua, Ub, Uc, ..., Uk) through which each user can send a message to said group (31), **characterized in, that** said operator assigns a different group identity (B, C) to each user (Uf) for each different group (31, 32) that said user (Uf) belongs to, that the combination of the group identity (A) for a user (Ud) and the user identity (d) uniquely specifies that user (Ud) as a member of that group (31), that every group identity (A, B, C, .., K) is identified as a server identity for said message server (1) by said communications network, that said message server (1), when receiving a message, identifies said sender (S1) by means of the sender user identity (Ua), that said message server identifies the group (31), and thus the receiving users (R1, R2, R3, R4, R5), by means of the unique combination of the sender's user identity (S1) and the group identity (A) used by said sender (S1), and that the same group identity (A) can be reused as a group identity for different users (Ub, Uc) in the same group (31), or in different groups, as long as each combination of a group identity and a user identity is unique.

2. A method according to claim 1, **characterized in, that** said user identity is a communication device identity, such as a subscriber number for said communication device, in said communications network, or a user identity for IP communication, such as Skype, Viber, WhatsApp, Joyn, in said communications network.

3. A method according to any preceding claim, **characterized in, that** said group identity (A, B, C, .., M) is a device identity for mobile communication, such as a subscriber number for said message server (1), in said communications network (2), or a user identity for IP communication, such as Skype, Viber, WhatsApp, Joyn, in said communications network.

4. A method according to any preceding claim, where said users can send and receive messages through different types of communication devices using different communication protocols and message formats, **characterized in, that** said message server receives said message according to a protocol and format used by said sender and, if required, that said message server reformat said message to send it to each receiver according to a format and protocol used by respective receiver or the format required to route the message to the receiver.

5. A method according to any preceding claim, **characterized in, that** a receiver can receive a message through various channels, and that said message server send a message to said receiver simultaneously through each available channel.

6. A method according to claim 5, **characterized in, that** when said message server has received a confirmation of received message through one of said channels, said message server:
- withdraws the messages sent through other channels to said receiver if said channel allows a withdrawal of a message, an/or
- changes the receiver's device notification by for example muting the notification for a new message if said receiver's device allows for such notification change.

7. A method according to any one of claims 1 to 4, **characterized in, that** a receiver can receive a message through various channels, and that said message server optimize the sending of a message to a receiver by starting to send through one channel, and if no confirmation of receipt is received, then sending through another channel, and so on until a confirmation of receipt has been received or all channels have been used, where said optimization is a cost optimization, where to least expensive channel is used first and the most expensive channel is used last, or where said optimization is a quality optimization depending on available quality of service (QoS), where the channel providing the highest QoS is used first and the channel providing the lowest QoS is used last.

8. A method according to any preceding claim, **characterized in, that** said sender receives a final confirmation message from said message server after the sending of a message, that said final confirmation message includes information on if one or several receivers did or did not receive the message or if it is in transport towards the receiver's device, and that said final confirmation message includes information on each receiver that did not receive the full content of said message, such as "User 1 received text but not picture", "User 2 did not receive any information", or similar information described in text or graphically by pictures.

9. A method according to any preceding claim, **characterized in, that** the sender can choose to send the message through a specified channel or choose among different ways of sending the message through multiple channels depending on content in said message or to optimize for cost or quality, and that the communication device of said user is set to either:
- dictate through which channel a message is to be sent,
- guide said user into using a specific channel for sending a message depending on content or settings for cost and/or QoS, or
- allow said user to choose freely from different available channels for sending a message.

10. A message server (1) adapted to manage a group (31, 32, 33) of users (Ua, Ub, Uc, ..., Uk) and the internal communication within said group of users, where the communication is performed by means of digital messaging over a communications network (2), each user (Ua, Ub, Uc, ..., Uk) using a communication device (Da, Db, Dc, ..., Dk), where each user (Ua, Ub, Uc, ..., Uk) has a unique identity (a, b, c, ..., k) in said communications network (2), where any user (Ua) in said group (31) can act as a sender (S1) of a message, in which case every other user (Ub, Uc, Ud, Ue, Uf) in said group (31) is a receiver (R1, R2, R3, R4, R5) of said message, where said message server (1) is adapted to receive said message from said sender (S1), where said message server (1) is adapted to forward said message to each receiver (R1, R2, R3, R4, R5), and where said message server (1) comprises a storage device (4) adapted to store a group identity (A, B, C, ..., M) assigned to each user (Ua, Ub, Uc, ..., Uk) through which each user can send a message to said group (31, 32), **characterized in, that** a different group identity is assigned to each user for each different group that said user belongs to, that said message server (1) is adapted to uniquely identify a user (Ua, Ub, Uc, ..., Uk) as a member of a group (31, 32) by means of the combination of said user's group identity (A, B, C, ..., M) and user identity (a, b, c, ..., k), that every group identity (A, B, C, .., M) is implemented in said message server (1) so that it is identified as a server identity for said message server (1) by said communications network (2), that said message server (1), when receiving a message, is adapted to identify said sender (S1) by means of the sender user identity (a), that said message server (1) is adapted to identify the group (31) by means of the unique combination (A-a) of the sender's user identity (a) and the group identity (A) used by said sender (S1), and that said message server (1) is adapted to send said received message to the receiving users (R1, R2, R3, R4, R5), and that said message server (1) is adapted to reuse the same group identity as a group identity for different users in the same group, or in different groups, as long as each combination of a group identity and user identity is unique.

11. A message server according to claim 10, **characterized in, that** said user identity (a, b, c, ..., k) is a communication device identity, such as a subscriber number for said communication device, in said communications network (2), or a user identity for IP communication, such as Skype, Viber, WhatsApp, Joyn, in said communications network (2).

12. A message server according to claim 10, **characterized in, that** said group identity (A, B, C, ..., M) is a device identity for mobile communication, such as a subscriber number for said message server (1), in said communications network (2), or a user identity for IP communication, such as Skype, Viber, WhatsApp, Joyn, in said communications network (2).

13. A message server according to any one of claims 10 to 12, where said message server (1) is adapted to receive and send messages from users (Ua, Ub, Uc, ..., Uk) with different types of communication devices (Da, Db, Dc, ..., Dk) using different communication protocols and message formats, **characterized in, that** said message server (1) is adapted to receive said message according to a protocol and format used by said sender (S1) and, if required, that said message server (1) is adapted to reformat said message and to send it to each receiver (R1, R2, R3, R4, R5) according to a format and protocol used by respective receiver or the format required to route the message to the receiver.

14. A message server according to any one of claims 10 to 13, **characterized in, that** said message server (1) is adapted to send a message to a receiver (R1) through various channels (21, 22, 23), and that said message server (1) is adapted to send a message to said receiver (R1) simultaneously through each available channel (21, 22, 23).

15. A message server according to claim 14, **characterized in, that** said message server (1) is adapted to receive a confirmation of received message, that when said message server (1) has received a confirmation of received message through one of said channels (21):
- said message server is adapted to withdraw the messages sent through other channels (22, 23) to said receiver (R1) if said channel allows a withdrawal of a message, and/or
- said message server (1) changes the receiver's device notification by for example muting the notification for a new message if said receiver's device (Db2) allows for such notification change.

16. A message server according to any one of claims 10 to 13, **characterized in, that** said message server (1) is adapted to send a message to a receiver through various channels (21, 22, 23), and that said message server (1) is adapted to optimize the sending of a message to a receiver (R1) by starting to send through one channel (21), and if no confirmation of receipt is received, then sending through another channel (22), and so on until a confirmation of receipt has been received or all channels have been used, and that said message server (1) is adapted to perform said optimization as a cost optimization, where to least expensive channel (21) is used first and the most expensive channel (23) is used last, or as a quality optimization depending on available quality of service (QoS), where the channel (23) providing the highest QoS is used first and the channel (21) providing the lowest QoS is used last.

17. A message server according to any one of claims 10 to 16, **characterized in, that** said message server (1) is adapted to send a final confirmation message to said sender (S1) after the sending of a message, and that said message server (1) is adapted to includes information on if one or several receivers (R1, R2, R3, R4, R5) did or did not receive the message or if the message is in transport towards the receiver's device in said final confirmation message, and that said message server (1) is adapted includes information on each receiver that did not receive the full content of said message in said final confirmation message, such as "User 1 received text but not picture", "User 2 did not receive any information", or similar information described in text or graphically by pictures.

18. A computer program product (51) comprising computer program code (51'), which, when executed by a computer, enables said computer to perform the steps of a message server (1) as described in any one of claims 1 to 8.

## Patentansprüche

1. Verfahren für einen Betreiber zur Bildung einer Gruppe (31) von Benutzern (Ua, Ub, Uc, ..., Uk) für interne Kommunikation innerhalb der Gruppe (31) von Benutzern mittels digitaler Nachrichtenübermittlung über ein Kommunikationsnetzwerk (2), wobei jeder Benutzer eine Kommunikationsvorrichtung (Da, Db, Dc, ..., Dk) verwendet, wobei jeder Benutzer (a, b, c, ..., k) eine eindeutige Identität im Kommunikationsnetzwerk (2) aufweist, wobei jeder Benutzer in der Gruppe (31) als ein Sender (S1) einer Nachricht agieren kann, in welchem Fall jeder andere Benutzer in der Gruppe (31) ein Empfänger (R1, R2, R3, R4, R5) der Nachricht ist, wobei der Sender (S1) die Nachricht an einen Nachrichtenserver (1) sendet, der dem Betreiber gehört, wobei der Nachrichtenserver (1) die Nachricht an jeden Empfänger (R1, R2, R3, R4, R5) weiterleitet, und wobei der Betreiber jedem Benutzer (Ua, Ub, Uc, ..., Uk) eine Gruppenidentität (A, B, C, ..., M) zuordnet, durch welche jeder Benutzer eine Nachricht an die Gruppe (31) senden kann, **dadurch gekennzeichnet, dass** der Betreiber jedem Benutzer (Uf) eine verschiedene Gruppenidentität (B, C) für jede verschiedene Gruppe (31, 32) zuordnet, zu welcher der Benutzer (Uf) gehört, dass die Kombination der Gruppenidentität (A) für einen Benutzer (Ud) und der Benutzeridentität (d) diesen Benutzer (Ud) eindeutig als ein Mitglied dieser Gruppe (31) spezifiziert, dass jede Gruppenidentität (A, B, C, .., K) durch das Kommunikationsnetzwerk als eine Serveridentität für den Nachrichtenserver (1) identifiziert wird, dass der Nachrichtenserver (1) bei Empfang einer Nachricht den Sender (S1) mittels der Sender-Benutzeridentität (Ua) identifiziert, dass der Nachrichtenserver die Gruppe (31) und demnach die empfangenden Benutzer (R1, R2, R3, R4, R5) mittels der eindeutigen Kombination der Benutzeridentität des Senders (S1) und der vom Sender (S1) verwendeten Gruppenidentität (A) identifiziert, und dass die Gruppenidentität (A) als eine Gruppenidentität für verschiedene Benutzer (Ub, Uc) in der gleichen Gruppe (31) oder in verschiedenen Gruppen wiederverwendet werden kann, solange jede Kombination einer Gruppenidentität und einer Benutzeridentität eindeutig ist.

2. Verfahren nach Anspruch 1, **dadurch gekennzeichnet, dass** die Benutzeridentität eine Kommunikationsvorrichtungsidentität, beispielsweise eine Teilnehmernummer für die Kommunikationsvorrichtung, im Kommunikationsnetzwerk oder eine Benutzeridentität für IP-Kommunikation, beispielsweise Skype, Viber, WhatsApp, Joyn, im Kommunikationsnetzwerk ist.

3. Verfahren nach einem der vorhergehenden Ansprüche, **dadurch gekennzeichnet, dass** die Gruppenidentität (A, B, C, .., M) eine Vorrichtungsidentität für Mobilkommunikation, beispielsweise eine Teilnehmernummer für den Nachrichtenserver (1), im Kommunikationsnetzwerk (2) oder eine Benutzeridentität für IP-Kommunikation, beispielsweise Skype, Viber, WhatsApp, Joyn, im Kommunikationsnetzwerk ist.

4. Verfahren nach einem der vorhergehenden Ansprüche, wobei die Benutzer Nachrichten durch verschiedene Typen von Kommunikationsvorrichtungen unter Verwendung verschiedener Kommunikationsprotokolle und Nachrichtenformate senden und empfangen können, **dadurch gekennzeichnet, dass** der Nachrichtenserver die Nachricht gemäß einem Protokoll und einem Format empfängt, die vom Sender verwendet werden, und dass der Nachrichtenserver nötigenfalls die Nachricht neu formatiert, um sie gemäß einem Format und einem Protokoll, die vom jeweiligen Empfänger verwendet werden, oder dem Format, das zum Leiten der Nachricht zum Empfänger erforderlich ist, an jeden Empfänger zu senden.

5. Verfahren nach einem der vorhergehenden Ansprüche, **dadurch gekennzeichnet, dass** ein Empfänger eine Nachricht durch verschiedene Kanäle empfangen kann, und dass der Nachrichtenserver eine Nachricht gleichzeitig durch jeden verfügbaren Kanal an den Empfänger senden kann.

6. Verfahren nach Anspruch 5, **dadurch gekennzeichnet, dass**, wenn der Nachrichtenserver eine Bestätigung einer empfangenen Nachricht durch einen der Kanäle empfangen hat, der Nachrichtenserver:
- die durch andere Kanäle an den Empfänger gesendeten Nachrichten zurücknimmt, wenn der Kanal eine Zurücknahme einer Nachricht zulässt, und/oder
- die Vorrichtungsbenachrichtigung des Empfängers zum Beispiel durch Unterbinden der Benachrichtigung für eine neue Nachricht ändert, wenn die Vorrichtung des Empfängers solch eine Benachrichtigungsänderung zulässt.

7. Verfahren nach einem der Ansprüche 1 bis 4, **dadurch gekennzeichnet, dass** ein Empfänger eine Nachricht durch verschiedene Kanäle empfangen kann, und dass der Nachrichtenserver das Senden einer Nachricht an einen Empfänger dadurch optimiert, dass er durch einen Kanal zu senden beginnt und dann, wenn keine Empfangsbestätigung empfangen wird, durch einen anderen Kanal sendet und so weiter, bis eine Empfangsbestätigung empfangen wurde oder alle Kanäle verwendet wurden, wobei die Optimierung eine Kostenoptimierung ist, wobei der kostengünstigste Kanal zuerst verwendet wird und der kostspieligste Kanal zuletzt verwendet wird, oder wobei die Optimierung eine Qualitätsoptimierung ist, die von einer verfügbaren Dienstqualität (QoS) abhängt, wobei der Kanal, der die höchste QoS bereitstellt, zuerst verwendet wird, und der Kanal, der die niedrigste QoS bereitstellt, zuletzt verwendet wird.

8. Verfahren nach einem der vorhergehenden Ansprüche, **dadurch gekennzeichnet, dass** der Sender nach dem Senden einer Nachricht eine endgültige Bestätigungsnachricht vom Nachrichtenserver empfängt, dass die endgültige Bestätigungsnachricht Informationen darüber umfasst, ob ein oder mehrere Empfänger die Nachricht empfangen haben oder nicht, oder ob sie zur Vorrichtung des Empfängers unterwegs ist, und dass die endgültige Bestätigungsnachricht Informationen über jeden Empfänger umfasst, der nicht den vollständigen Inhalt der Nachricht empfangen hat, beispielsweise "Benutzer 1 empfing Text, aber kein Bild", "Benutzer 2 empfing keine Informationen" oder ähnliche Informationen, die in Text geschrieben oder grafisch durch Bilder dargestellt werden.

9. Verfahren nach einem der vorhergehenden Ansprüche, **dadurch gekennzeichnet, dass** der Sender wählen kann, die Nachricht durch einen spezifizierten Kanal zu senden, oder unter verschiedenen Möglichkeiten zum Senden der Nachricht durch mehrere Kanäle in Abhängigkeit vom Inhalt in der Nachricht oder zum Optimieren hinsichtlich Kosten oder Qualität wählen kann, und dass die Kommunikationsvorrichtung des Benutzers entweder eingestellt wird auf:
- Vorschreiben, durch welchen Kanal eine Nachricht gesendet werden soll,
- Anleiten des Benutzers zum Verwenden eines spezifischen Kanals zum Senden einer Nachricht in Abhängigkeit vom Inhalt oder von Einstellungen hinsichtlich Kosten und/oder QoS oder
- Zulassen, dass der Benutzer frei aus verschiedenen verfügbaren Kanälen zum Senden einer Nachricht wählt.

10. Nachrichtenserver (1), der zum Verwalten einer Gruppe (31, 32, 33) von Benutzern (Ua, Ub, Uc, ..., Uk) und der internen Kommunikation innerhalb der Gruppe von Benutzern ausgelegt ist, wobei die Kommunikation mittels digitaler Nachrichtenübermittlung über ein Kommunikationsnetzwerk (2) durchgeführt wird, wobei jeder Benutzer (Ua, Ub, Uc, ..., Uk) eine Kommunikationsvorrichtung (Da, Db, Dc, ..., Dk) verwendet, wobei jeder Benutzer (Ua, Ub, Uc, ..., Uk) eine eindeutige Identität (a, b, c, ..., k) im Kommunikationsnetzwerk (2) aufweist, wobei jeder Benutzer (Ua) in der Gruppe (31) als ein Sender (S1) einer Nachricht agieren kann, in welchem Fall jeder andere Benutzer (Ub, Uc, Ud, Ue, Uf) in der Gruppe (31) ein Empfänger (R1, R2, R3, R4, R5) der Nachricht ist, wobei der Nachrichtenserver (1) zum Empfangen der Nachricht vom Sender (S1) ausgelegt ist, wobei der Nachrichtenserver (1) zum Weiterleiten der Nachricht an jeden Empfänger (R1, R2, R3, R4, R5) ausgelegt ist, und wobei der Nachrichtenserver (1) eine Speichervorrichtung (4) umfasst, die zum Speichern einer Gruppenidentität (A, B, C, ..., M) ausgelegt ist, die jedem Benutzer (Ua, Ub, Uc, ..., Uk) zugeordnet wird und durch die jeder Benutzer eine Nachricht an die Gruppe (31, 32) senden kann, **dadurch gekennzeichnet, dass** jedem Benutzer eine verschiedene Gruppenidentität für jede verschiedene Gruppe zugeordnet wird, zu welcher der Benutzer gehört, dass der Nachrichtenserver (1) so ausgelegt ist, dass er einen Benutzer (Ua, Ub, Uc, ..., Uk) mittels der Kombination der Gruppenidentität des Benutzers (A, B, C, ..., M) und der Benutzeridentität (a, b, c, ..., k) eindeutig als ein Mitglied einer Gruppe (31, 32) identifiziert, dass jede Gruppenidentität (A, B, C, ..., M) so im Nachrichtenserver (1) implementiert ist, dass sie durch das Kommunikationsnetzwerk (2) als eine Serveridentität für den Nachrichtenserver (1) identifiziert wird, das der Nachrichtenserver (1) so ausgelegt ist, dass er bei Empfang einer Nachricht den Sender (S1) mittels der Sender-Benutzeridentität (a) identifiziert, dass der Nachrichtenserver (1) zum Identifizieren der Gruppe (31) mittels der eindeutigen Kombination (A-a) der Benutzeridentität (a) des Senders und der vom Sender (S1) verwendeten Gruppenidentität (A) ausgelegt ist, und dass der Nachrichtenserver (1) zum Senden der empfangenen Nachricht an die empfangenden Benutzer (R1, R2, R3, R4, R5) ausgelegt ist, und dass der Nachrichtenserver (1) so ausgelegt ist, dass er die gleiche Gruppenidentität als eine Gruppenidentität für verschiedene Benutzer in der gleichen Gruppe oder in verschiedenen Gruppen wiederverwendet, solange jede Kombination einer Gruppenidentität und einer Benutzeridentität eindeutig ist.

11. Nachrichtenserver nach Anspruch 10, **dadurch gekennzeichnet, dass** die Benutzeridentität (a, b, c, ..., k) eine Kommunikationsvorrichtungsidentität, beispielsweise eine Teilnehmernummer für die Kommunikationsvorrichtung, im Kommunikationsnetzwerk (2) oder eine Benutzeridentität für IP-Kommunikation, beispielsweise Skype, Viber, WhatsApp, Joyn, im Kommunikationsnetzwerk (2) ist.

12. Nachrichtenserver nach Anspruch 10, **dadurch gekennzeichnet, dass** die Gruppenidentität (A, B, C, ..., M) eine Vorrichtungsidentität für Mobilkommunikation, beispielsweise eine Teilnehmernummer für den Nachrichtenserver (1), im Kommunikationsnetzwerk (2) oder eine Benutzeridentität für IP-Kommunikation, beispielsweise Skype, Viber, WhatsApp, Joyn, im Kommunikationsnetzwerk (2) ist.

13. Nachrichtenserver nach einem der Ansprüche 10 bis 12, wobei der Nachrichtenserver (1) zum Empfangen und Senden von Nachrichten von Benutzern (Ua, Ub, Uc, ..., Uk) mit verschiedenen Typen von Kommunikationsvorrichtungen (Da, Db, Dc, ..., Dk) unter Verwendung verschiedener Kommunikationsprotokolle und Nachrichtenformate ausgelegt ist, **dadurch gekennzeichnet, dass** der Nachrichtenserver (1) zum Empfangen der Nachricht gemäß einem Protokoll und einem Format ausgelegt ist, die vom Sender (S1) verwendet werden, und dass der Nachrichtenserver (1) so ausgelegt ist, dass er nötigenfalls die Nachricht neu formatiert und sie gemäß einem Format und einem Protokoll, die vom jeweiligen Empfänger verwendet werden, oder dem Format, das zum Leiten der Nachricht zum Empfänger erforderlich ist, an jeden Empfänger (R1, R2, R3, R4, R5) sendet.

14. Nachrichtenserver nach einem der Ansprüche 10 bis 13, **dadurch gekennzeichnet, dass** der Nachrichtenserver (1) zum Senden einer Nachricht an einen Empfänger (R1) durch verschiedene Kanäle (21, 22, 23) ausgelegt ist, und dass der Nachrichtenserver (1) zum gleichzeitigen Senden einer Nachricht an den Empfänger (R1) durch jeden verfügbaren Kanal (21, 22, 23) ausgelegt ist.

15. Nachrichtenserver nach Anspruch 14, **dadurch gekennzeichnet, dass** der Nachrichtenserver (1) zum Empfangen einer Bestätigung einer empfangenen Nachricht ausgelegt ist, dass, wenn der Nachrichtenserver (1) eine Bestätigung der empfangenen Nachricht durch einen der Kanäle (21) empfangen hat:
- der Nachrichtenserver so ausgelegt ist, dass er die durch andere Kanäle (22, 23) an den Empfänger (R1) gesendeten Nachrichten zurücknimmt, wenn der Kanal eine Zurücknahme einer Nachricht zulässt, und/oder
- der Nachrichtenserver (1) die Vorrichtungsbenachrichtigung des Empfängers zum Beispiel durch Unterbinden der Benachrichtigung für eine neue Nachricht ändert, wenn die Vorrichtung des Empfängers (Db2) solch eine Benachrichtigungsänderung zulässt.

16. Nachrichtenserver nach einem der Ansprüche 10 bis 13, **dadurch gekennzeichnet, dass** der Nachrichtenserver (1) zum Senden einer Nachricht an einen Empfänger durch verschiedene Kanäle (21, 22, 23) ausgelegt ist, und dass der Nachrichtenserver (1) so ausgelegt ist, dass er das Senden einer Nachricht an einen Empfänger (R1) dadurch optimiert, dass er durch einen Kanal (21) zu senden beginnt und dann, wenn keine Empfangsbestätigung empfangen wird, durch einen anderen Kanal (22) sendet und so weiter, bis eine Empfangsbestätigung empfangen wurde oder alle Kanäle verwendet wurden, und dass der Nachrichtenserver (1) so ausgelegt ist, dass er die Optimierung als eine Kostenoptimierung, wobei der kostengünstigste Kanal (21) zuerst verwendet wird und der kostspieligste Kanal (23) zuletzt verwendet wird, oder als eine Qualitätsoptimierung durchführt, die von einer verfügbaren Dienstqualität (QoS) abhängt, wobei der Kanal (23), der die höchste QoS bereitstellt, zuerst verwendet wird, und der Kanal (21), der die niedrigste QoS bereitstellt, zuletzt verwendet wird.

17. Nachrichtenserver nach einem der Ansprüche 10 bis 16, **dadurch gekennzeichnet, dass** der Nachrichtenserver (1) so ausgelegt ist, dass er nach dem Senden einer Nachricht eine endgültige Bestätigungsnachricht an den Sender (S1) sendet, und dass der Nachrichtenserver (1) so ausgelegt ist, dass er Informationen darüber, ob ein oder mehrere Empfänger (R1, R2, R3, R4, R5) die Nachricht empfangen haben oder nicht, oder ob die Nachricht zur Vorrichtung des Empfängers unterwegs ist, in die endgültige Bestätigungsnachricht einfügt, und dass der Nachrichtenserver (1) so ausgelegt ist, dass er Informationen über jeden Empfänger, der nicht den vollständigen Inhalt der Nachricht empfangen hat, beispielsweise "Benutzer 1 empfing Text, aber kein Bild", "Benutzer 2 empfing keine Informationen" oder ähnliche Informationen, die in Text geschrieben oder grafisch durch Bilder dargestellt werden, in die endgültige Bestätigungsnachricht einfügt.

18. Computerprogrammprodukt (51), umfassend Computerprogrammcode (51'), der bei Ausführung durch einen Computer den Computer zum Ausführen der Schritte eines Nachrichtenservers (1) nach einem der Ansprüche 1 bis 8 befähigt.

## Revendications

1. Procédé permettant à un opérateur de former un groupe (31) d'utilisateurs (Ua, Ub, Uc, ...., Uk) pour une communication interne au sein dudit groupe (31) d'utilisateurs au moyen d'une messagerie numérique sur un réseau de communication (2), chaque utilisateur utilisant un dispositif de communication (Da, Db, Dc,..., Dk), où chaque utilisateur (a, b, c, ..k) a une identité unique dans ledit réseau de communication (2), où n'importe quel utilisateur dans ledit groupe (31) peut agir en tant qu'expéditeur (S1) d'un message, auquel cas chaque autre utilisateur dans ledit groupe (31) est un destinataire (R1, R2, R3, R4, R5) dudit message, où ledit expéditeur (S1) envoie ledit message à un serveur de messages (1) appartenant audit opérateur, où ledit serveur de messages (1) transmet ledit message à chaque destinataire (R1, R2, R3, R4, R5), et où ledit opérateur affecte une identité de groupe (A, B, C, ...., M) à chaque utilisateur (Ua, Ub, Uc, ... Uk) par laquelle chaque utilisateur peut envoyer un message audit groupe (31), **caractérisé en ce que** ledit opérateur attribue une identité de groupe différente (B, C) à chaque utilisateur (Uf) pour chaque groupe différent (31, 32) auquel appartient ledit utilisateur (Uf), **en ce que** la combinaison de l'identité de groupe (A) pour un utilisateur (Ud) et l'identité d'utilisateur (d) spécifie de manière unique cet utilisateur (Ud) comme un membre de ce groupe (31), **en ce que** chaque identité de groupe (A, B, C, ... K) est identifiée en tant qu'identité de serveur pour ledit serveur de messages (1) par ledit réseau de communication, **en ce que** ledit serveur de messages (1), lorsqu'il reçoit un message, identifie ledit expéditeur (S1) au moyen de l'identité d'utilisateur expéditeur (Ua), **en ce que** ledit serveur de messages identifie le groupe (31), et donc les utilisateurs destinataires (R1, R2, R3, R4, R5), au moyen de la combinaison unique de l'identité d'utilisateur de l'expéditeur (S1) et de l'identité de groupe (A) utilisée par ledit expéditeur (S1), et **en ce que** la même identité de groupe (A) peut être réutilisée comme identité de groupe pour différents utilisateurs (Ub, Uc) dans le même groupe (31), ou dans différents groupes, tant que chaque combinaison d'une identité de groupe et d'une identité d'utilisateur est unique.

2. Procédé selon la revendication 1, **caractérisé en ce que** ladite identité d'utilisateur est une identité de dispositif de communication, telle qu'un numéro d'abonné pour ledit dispositif de communication, dans ledit réseau de communication, ou une identité d'utilisateur pour une communication IP, telle que Skype, Viber, WhatsApp, Joyn, dans ledit réseau de communication.

3. Procédé selon l'une quelconque des revendications précédentes, **caractérisé en ce que** ladite identité de groupe (A, B, C, .., M) est une identité de dispositif pour la communication mobile, telle qu'un numéro d'abonné pour ledit serveur de messages (1), dans ledit réseau de communications (2), ou une identité d'utilisateur pour la communication IP, telle que Skype, Viber, WhatsApp, Joyn, dans ledit réseau de communication.

4. Procédé selon l'une quelconque des revendications précédentes, dans lequel lesdits utilisateurs peuvent envoyer et recevoir des messages par l'intermédiaire de différents types de dispositifs de communication utilisant différents protocoles de communication et formats de message, **caractérisé en ce que** ledit serveur de messages reçoit ledit message selon un protocole et un format utilisés par ledit expéditeur et, si nécessaire, **en ce que** ledit serveur de messages reformate ledit message pour l'envoyer à chaque destinataire selon un format et un protocole utilisés par le destinataire respectif ou le format requis pour acheminer le message au destinataire.

5. Procédé selon l'une quelconque des revendications précédentes, **caractérisé en ce qu'**un destinataire peut recevoir un message par différents canaux, et **en ce que** ledit serveur de messages envoie un message audit destinataire simultanément par chaque canal disponible.

6. Procédé selon la revendication 5, **caractérisé en ce que**, lorsque ledit serveur de messages a reçu une confirmation du message reçu par l'un desdits canaux, ledit serveur de messages :
- retire les messages envoyés par d'autres canaux audit destinataire si ledit canal permet le retrait d'un message, et/ou
- modifie la notification du dispositif du destinataire en, par exemple, désactivant la notification pour un nouveau message si ledit dispositif du destinataire permet un tel changement de notification.

7. Procédé selon l'une quelconque des revendications 1 à 4, **caractérisé en ce qu'**un destinataire peut recevoir un message par différents canaux, et **en ce que** ledit serveur de messages optimise l'envoi d'un message à un destinataire en commençant à envoyer par un canal et, si aucune confirmation de réception n'est reçue, il envoie alors par un autre canal, et ainsi de suite jusqu'à ce qu'une confirmation de réception ait été reçue ou que tous les canaux aient été utilisés, où ladite optimisation est une optimisation des coûts, où le canal le moins cher est utilisé en premier et le canal le plus cher est utilisé en dernier ou, là où ladite optimisation est une optimisation de la qualité basée sur la qualité de service (QoS) disponible, où le canal fournissant la QoS la plus élevée est utilisé en premier et le canal fournissant la QoS la plus faible est utilisé en dernier.

8. Procédé selon l'une quelconque des revendications précédentes, **caractérisé en ce que** ledit expéditeur reçoit un message de confirmation final dudit serveur de messages après l'envoi d'un message, **en ce que** ledit message de confirmation final comprend des informations sur le fait qu'un ou plusieurs destinataires ont reçu, ou non, le message ou s'il est en cours d'acheminement vers le dispositif du destinataire, et **en ce que** ledit message de confirmation final comprend des informations sur chaque destinataire qui n'a pas reçu le contenu complet dudit message, telles que « L'utilisateur 1 a reçu le texte mais pas l'image », « L'utilisateur 2 n'a reçu aucune information » ou des informations similaires décrites au moyen d'un texte ou représentées graphiquement par des images.

9. Procédé selon l'une quelconque des revendications précédentes, **caractérisé en ce que** l'expéditeur peut choisir d'envoyer le message par l'intermédiaire d'un canal spécifié ou choisir parmi différentes manières d'envoyer le message par l'intermédiaire de plusieurs canaux en fonction du contenu dudit message ou d'optimiser le coût ou la qualité, et **en ce que** le dispositif de communication dudit utilisateur est réglé :
- soit pour dicter par quel canal un message doit être envoyé,
- soit pour guider ledit utilisateur dans l'utilisation d'un canal spécifique pour l'envoi d'un message en fonction du contenu ou des paramètres de coût et/ou de QoS,
- soit pour permettre à l'utilisateur de choisir librement parmi les différents canaux disponibles pour l'envoi d'un message.

10. Serveur de messagerie (1) adapté pour gérer un groupe (31, 32, 33) d'utilisateurs (Ua, Ub, Uc, ...., Uk) et la communication interne au sein dudit groupe d'utilisateurs, où la communication est effectuée au moyen d'une messagerie numérique sur un réseau de communication (2), chaque utilisateur (Ua, Ub, Uc, ..., Uk) utilisant un dispositif de communication (Da, Db, Dc, ...., Dk), où chaque utilisateur (Ua, Ub, Uc, ...., Uk) a une identité unique (a, b, c, ...., k) dans ledit réseau de communication (2), où n'importe quel utilisateur (Ua) dans ledit groupe (31) peut agir en tant qu'expéditeur (S1) d'un message, auquel cas chaque autre utilisateur (Ub, Uc, Ud, Ue, Uf) dans ledit groupe (31) est un destinataire (R1, R2, R3, R4, R5) dudit message, où ledit serveur de messages (1) est adapté pour recevoir ledit message dudit expéditeur (S1), où ledit serveur de messages est adapté pour transmettre ledit message à chaque destinataire (R1, R2, R3, R4, R5), et où ledit serveur de messages (1) comprend un dispositif de stockage (4) adapté pour stocker une identité de groupe (A, B, C, ..., M) attribuée à chaque utilisateur (Ua, Ub, Uc, ... Uk) par laquelle chaque utilisateur peut envoyer un message audit groupe (31, 32), **caractérisé en ce qu'**une identité de groupe différente est attribuée à chaque utilisateur pour chaque groupe différent auquel appartient ledit utilisateur appartient, **en ce que** ledit serveur de messages (1) est adapté pour identifier de manière unique un utilisateur (Ua, Ub, Uc, ..., Uk) en tant que membre d'un groupe (31, 32) au moyen de la combinaison de l'identité de groupe dudit utilisateur (A, B, C, ... M) et de l'identité d'utilisateur (a, b, c, ..., k), **en ce que** chaque identité de groupe (A, B, C, ..., M) est implémentée dans ledit serveur de messages (1) de manière à ce qu'elle soit identifiée en tant qu'identité de serveur pour ledit serveur de messages (1) par ledit réseau de communication (2), **en ce que** ledit serveur de messages (1), lorsqu'il reçoit un message, est adapté pour identifier ledit expéditeur (S1) au moyen de l'identité d'utilisateur expéditeur (a), **en ce que** ledit serveur de messages (1) est adapté pour identifier le groupe (31) au moyen de la combinaison unique (A-a) de l'identité d'utilisateur expéditeur (a) et de l'identité de groupe (A) utilisée par ledit expéditeur (S1), et **en ce que** ledit serveur de messages (1) est adapté pour envoyer ledit message reçu aux utilisateurs destinataires (R1, R2, R3, R4, R5), et **en ce que** ledit serveur de messages (1) est adapté pour réutiliser la même identité de groupe en tant qu'identité de groupe pour différents utilisateurs dans le même groupe, ou dans différents groupes, tant que chaque combinaison d'une identité de groupe et d'une identité d'utilisateur est unique.

11. Serveur de messages selon la revendication 10, **caractérisé en ce que** ladite identité d'utilisateur (a, b, c, ..., k) est une identité de dispositif de communication, telle qu'un numéro d'abonné pour ledit dispositif de communication, dans ledit réseau de communication (2), ou une identité d'utilisateur pour une communication IP, telle que Skype, Viber, WhatsApp, Joyn, dans ledit réseau de communication (2).

12. Serveur de messages selon la revendication 10, **caractérisé en ce que** ladite identité de groupe (A, B, C, ..., M) est une identité de dispositif pour la communication mobile, telle qu'un numéro d'abonné pour ledit serveur de messages (1), dans ledit réseau de communication (2), ou une identité d'utilisateur pour une communication IP, telle que Skype, Viber, WhatsApp, Joyn, dans ledit réseau de communication (2).

13. Serveur de messages selon l'une quelconque des revendications 10 à 12, dans lequel ledit serveur de messages (1) est adapté pour recevoir et envoyer des messages d'utilisateurs (Ua, Ub, Uc, ...., Uk) avec différents types de dispositifs de communication (Da, Db, Dc, ..., Dk) en utilisant différents protocoles de communication et formats de message, **caractérisé en ce que** ledit serveur de messages (1) est adapté pour recevoir ledit message selon un protocole et un format utilisés par ledit expéditeur (S1) et, si nécessaire, **en ce que** ledit serveur de messages (1) est adapté pour reformater ledit message et pour l'envoyer à chaque destinataire (R1, R2, R3, R4, R5) selon un format et un protocole utilisés par le destinataire respectif ou le format requis pour acheminer le message au destinataire.

14. Serveur de messages selon l'une quelconque des revendications 10 à 13, **caractérisé en ce que** ledit serveur de messages (1) est adapté pour envoyer un message à un destinataire (R1) par divers canaux (21, 22, 23), et **en ce que** ledit serveur de messages (1) est adapté pour envoyer un message audit destinataire (R1) simultanément par chaque canal disponible (21, 22, 23).

15. Serveur de messages selon la revendication 14, **caractérisé en ce que** ledit serveur de messages (1) est adapté pour recevoir une confirmation de message reçu, **en ce que** lorsque ledit serveur de messages (1) a reçu une confirmation d'un message reçu par l'un desdits canaux (21) :
- ledit serveur de messages est adapté pour retirer les messages envoyés par d'autres canaux (22, 23) audit destinataire (R1) si ledit canal permet le retrait d'un message, et/ou
- ledit serveur de messages (1) modifie la notification du dispositif du destinataire en, par exemple, désactivant la notification pour un nouveau message si ledit dispositif du destinataire (Db2) permet un tel changement de notification.

16. Serveur de messages selon l'une quelconque des revendications 10 à 13, **caractérisé en ce que** ledit serveur de messages (1) est adapté pour envoyer un message à un destinataire par différents canaux (21, 22, 23), et **en ce que** ledit serveur de messages (1) est adapté pour optimiser l'envoi d'un message à un destinataire (R1) en commençant à envoyer par un canal (21) et, si aucune confirmation de réception n'est reçue, il envoie alors par un autre canal (22), et ainsi de suite jusqu'à ce qu'une confirmation de réception ait été reçue ou que tous les canaux aient été utilisés, et **en ce que** ledit serveur de messages (1) est adapté pour effectuer ladite optimisation en tant qu'optimisation de coût, où le canal le moins cher (21) est utilisé en premier et le canal le plus cher (23) est utilisé en dernier, ou en tant qu'optimisation de la qualité sur la base de la qualité de service (QoS) disponible, où le canal (23) fournissant la QoS la plus élevée est utilisé en premier et le canal (21) fournissant la QoS la plus faible est utilisé en dernier.

17. Serveur de messages selon l'une quelconque des revendications 10 à 16, **caractérisé en ce que** ledit serveur de messages (1) est adapté pour envoyer un message de confirmation final audit expéditeur (S1) après l'envoi d'un message, et **en ce que** ledit serveur de messages (1) est adapté pour inclure des informations sur le fait qu'un ou plusieurs destinataires (R1, R2, R3, R4, R5) ont reçu, ou non, le message ou si le message est en cours d'acheminement vers le dispositif du destinataire dans ledit message de confirmation final, et **en ce que** ledit serveur de messages (1) est adapté pour inclure des informations sur chaque destinataire qui n'a pas reçu le contenu complet dudit message dans ledit message de confirmation final, telles que « L'utilisateur 1 a reçu le texte mais pas l'image », « L'utilisateur 2 n'a reçu aucune information » ou des informations similaires décrites au moyen d'un texte ou représentées graphiquement par des images.

18. Produit programme informatique (51) comprenant un code de programme informatique (51') qui, lorsqu'il est exécuté par un ordinateur, permet audit ordinateur d'exécuter les étapes d'un serveur de messages (1) telles qu'elles sont décrites dans l'une quelconque des revendications 1 à 8.
